# EUROPÄISCHE PATENTSCHRIFT

(11) **EP 1 152 156 B1**
(45) Veröffentlichungstag und Bekanntmachung des Hinweises auf die Patenterteilung: **12.11.2003**
(21) Anmeldenummer: 01102430.4
(22) Anmeldetag: 03.02.2001
(51) Int. Cl.: F16B 5/02

(54) **Vorrichtung zur insbesondere akustisch entkoppelten Befestigung**
Device particularly for acoustic dampened fastening
Dispositif de fixation notamment pour atténuer le son

(30) Priorität: 03.05.2000 DE 10021575
(43) Veröffentlichungstag der Anmeldung: 07.11.2001
(73) Patentinhaber: ElringKlinger AG, 72581 Dettingen (DE)
(72) Erfinder: Stanienda, Henryk, 72584 Hülben (DE)
(74) Vertreter: Möbus, Daniela, Dr.-Ing.

(56) Entgegenhaltungen:
- EP-A- 0 936 363
- DE-C- 4 228 625
- GB-A- 2 176 863
- US-A- 3 675 881

## Beschreibung

Die Erfindung betrifft eine Vorrichtung zur insbesondere akustisch entkoppelten Befestigung von leicht schwingfähigen Bauteilen an einem Verankerungsteil, insbesondere von Hitzeschildern in Kraftfahrzeugen, mit einer durch eine Bohrung im Bauteil geführten Hülse, durch die eine Befestigungsschraube gesteckt ist, und mit mindestens einem zwischen dem Bauteil und dem Verankerungsteil angeordneten Entkopplungselement.

Eine derartige Vorrichtung ist z.B. aus der GB-A 2 176 863 bekannt.

Wenn man bei Vorrichtungen der eingangs genannten Art die Befestigungsschraube zu stark anzieht, wird das Entkopplungselement sehr stark zusammengedrückt, wodurch seine Dämpfungseigenschaften beeinträchtigt werden. Deshalb ist es bei den Vorrichtungen der eingangs genannten Art bisher immer wichtig, dass das Montagepersonal darauf achtet, die Befestigungsschraube nur so weit anzuziehen, dass eine zuverlässige Befestigung gewährleistet ist und gleichzeitig das Dämpfungsvermögen des mindestens einen Entkopplungselements nicht zu stark beeinträchtigt wird.

Die Erfindung hat die Aufgabe, eine Vorrichtung der eingangs genannten Art dahin gehend zu verbessern, dass ihre Montage und Anwendung vereinfacht wird.

Die Erfindung löst die gestellte Aufgabe mittels einer Vorrichtung der eingangs genannten Art, wobei eine zweite Hülse koaxial mit der ersten Hülse montiert und an jeweils einem Ende der beiden Hülsen eine ringförmige Scheibe angeordnet ist, sodass die eine Scheibe zwischen dem Verankerungsteil und dem Bauteil und die andere Scheibe zwischen dem Bauteil und dem Schraubenkopf angeordnet ist, wobei zwischen dem Hitzeschild und der dem Verankerungsteil zugewandten Scheibe das mindestens eine Entkopplungselement angebracht ist. Dadurch, dass das ohne Scheibe versehene Ende der äußeren Hülse gegen die mit der inneren Hülse verbundene Scheibe anstößt, kann das Entkopplungselement durch übermäßiges Anziehen der Befestigungsschraube nur noch sehr begrenzt zusammengedrückt werden. Folglich kann bei der Verbindung des Bauteils mit dem Verankerungsteil durch die Befestigungsschraube gleichzeitig eine optimale akustische Entkopplung zwischen dem Bauteil und dem Verankerungsteil erzielt werden, die nicht durch Bedienungsfehler beeinträchtigt werden kann.

Zur Optimierung der akustischen Entkopplung zwischen dem Bauteil und dem Verankerungsteil kann vorzugsweise ein zweites Entkopplungselement zwischen der dem Schraubenkopf zugewandten Scheibe und dem Bauteil montiert sein.

Die Schraube, die innere Hülse, die der Schraube zugewandte Scheibe und das zweite Entkopplungselement und/oder die äußere Hülse, das mindestens eine Entkopplungselement und die dem Verankerungsteil zugewandte Scheibe können jeweils zu einer Baueinheit montiert sein. Somit können diese Bestandteile zur Bereitstellung für die Fertigung als zwei komplette Baueinheiten vorgefertigt werden, sodass als weiterer Vorteil die gesamte Fertigung rationeller abläuft.

Zur Realisierung der Vormontage können die beiden Hülsen mit einem Presssitz ineinander gesteckt sein und die Befestigungsschraube durch Verpressen mit der Hülse verliersicher vormontiert werden. Damit lässt sich die gesamte Vorrichtung verliersicher am Bauteil vormontieren, sodass zur Befestigung des Bauteils am Verankerungsteil nur noch die Schrauben in die dafür vorgesehenen Bohrungen im Verankerungsteil eingeführt und festgezogen werden müssen.

Einen besonders guten Dämpfungseffekt weist das mindestens eine Entkopplungselement auf, wenn es aus einem Elastomer gefertigt ist.

Die erfindungsgemäße Vorrichtung eignet sich insbesondere zur akustisch entkoppelten Befestigung von Bauteilen, kann jedoch mit den gleichen Vorteilen auch für andere Arten von Befestigungen eingesetzt werden.

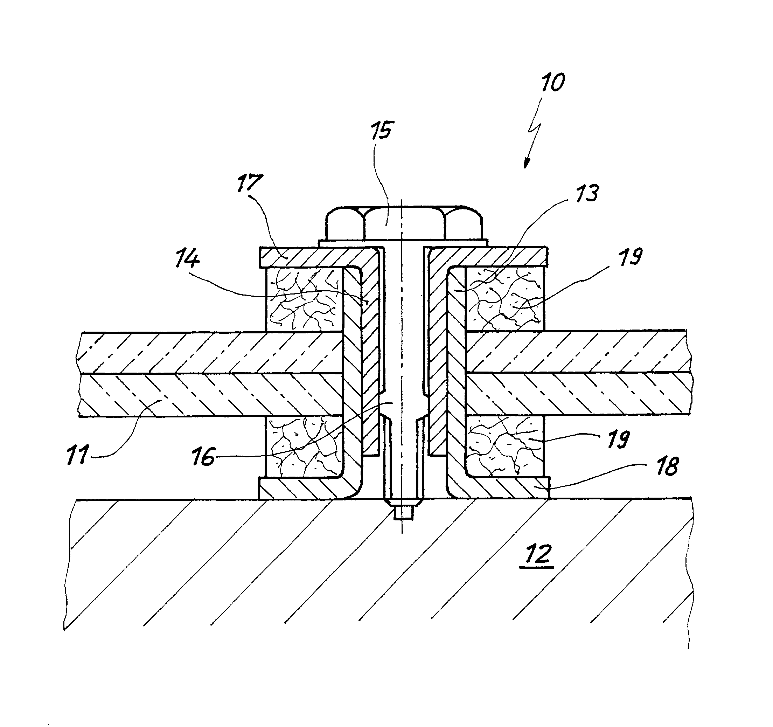

Nachfolgend wird ein Ausführungsbeispiel der erfindungsgemäßen Vorrichtung anhand der beiliegenden Zeichnung näher erläutert.

Die einzige Figur zeigt eine Vorrichtung 10 zur akustisch entkoppelten Befestigung von einem leicht schwingfähigen Bauteil 11 mit einem Verankerungsteil 12, wobei das Verankerungsteil 12 ein Hitzeschild eines Kraftfahrzeugs sein kann. Eine Hülse 13 ist durch eine Bohrung des Bauteils 11 gesteckt. In die Hülse 13 ist wiederum eine weitere Hülse 14 eingeführt. Tn der Hülse 14 ist eine Befestigungsschraube 15 durch Verpressen mit der Hülse 14 verliersicher angebracht. Zwecks des besseren Verpressens weist die Schraube 15 an ihrem Schaft einen umlaufenden Wulst 16 auf. Zwischen einer an der Hülse 14 angeordneten Scheibe 17 und dem Bauteil 11 und zwischen einer an der Hülse 13 angeordneten Scheibe 18 und dem Bauteil 11 ist jeweils ein Entkopplungselement 19 angeordnet. Durch das Entkopplungselement 19 werden Schwingungen des Bauteils 11 gedämpft, wodurch ihre Übertragung auf das Verankerungsteil 12 reduziert wird. Die Hülse 13 stößt mit ihrem ohne Scheibe versehenen Ende gegen die an der Hülse 14 angeordnete Scheibe 17, wodurch beim Anziehen der Schraube 15 eine beliebig starke Kompression des Entkopplungselements 19 verhindert wird. Die daraus resultierende geringe Kompression des Entkopplungselements 19 bedingt eine optimale Dämpfungswirkung. Die Hülsen 14 und 13 können durch einen Presssitz ineinander gesteckt und die Entkopplungselemente 19 mit den Scheiben 17 und 18 fest verbunden sein. Zusammen mit der Verpressung der Schraube 15 mit der Hülse 17 kann die Vorrichtung somit zu einer vormontierten Baueinheit hergestellt werden.

## Patentansprüche

1. Vorrichtung (10) zur insbesondere akustisch entkoppelten Befestigung von leicht schwingfähigen Bauteilen (11) an einem Verankerungsteil (12), insbesondere von Hitzeschildern in Kraftfahrzeugen, mit einer durch eine Bohrung im Bauteil (11) geführten Hülse (14), durch die eine Befestigungsschraube (15) gesteckt ist, und mit mindestens einem zwischen dem Bauteil (11) und dem Verankerungsteil (12) angeordneten Entkopplungselement (19), **dadurch gekennzeichnet, dass** eine zweite Hülse (13) koaxial zu der ersten Hülse (14) montiert ist und an jeweils einem Ende der beiden Hülsen (13, 14) eine ringförmige Scheibe (17, 18) angeordnet ist, sodass die eine Scheibe (18) zwischen dem Verankerungsteil (12) und dem Bauteil (11) und die andere Scheibe (17) zwischen dem Bauteil (11) und dem Schraubenkopf (15) angeordnet ist, wobei zwischen dem Bauteil (11) und der dem Verankerungsteil (12) zugewandten Scheibe (18) das mindestens eine Entkopplungselement (19) angebracht ist.

2. Vorrichtung (10) nach Anspruch 1, **dadurch gekennzeichnet, dass** ein zweites Entkopplungselement (19) zwischen der dem Schraubenkopf (15) zugewandten Scheibe (17) und dem Bauteil (11) montiert ist.

3. Vorrichtung (10) nach Anspruch 2, **dadurch gekennzeichnet, dass** die Schraube (15), die innere Hülse (14), die der Schraube (15) zugewandte Scheibe (17) und das zweite Entkopplungselement (19) und/oder die äußere Hülse (13), das mindestens eine Entkopplungselement (19) und die dem Verankerungsteil (12) zugewandte Scheibe (18) zu einer Baueinheit montiert sind.

4. Vorrichtung (10) nach einem der Ansprüche 1 bis 3, **dadurch gekennzeichnet, dass** die beiden Hülsen (13, 14) mit einem Presssitz ineinander gesteckt sind.

5. Vorrichtung (10) nach einem der Ansprüche 1 bis 4, **dadurch gekennzeichnet, dass** die Befestigungsschraube (15) verliersicher angeordnet ist.

6. Vorrichtung (10) nach Anspruch 5, **dadurch gekennzeichnet, dass** die verliersichere Schraube (15) mit der inneren Hülse (14) verpresst ist.

7. Vorrichtung (10) nach einem der Ansprüche 1 bis 6, **dadurch gekennzeichnet, dass** das mindestens eine Entkopplungselement (19) aus einem Elastomer gefertigt ist.

## Claims

1. A device (10), particularly for the acoustically decoupled fastening of slightly vibrating components (11) to an anchoring part (12), in particular the fastening of heat shields in motor vehicles, said device (10) comprising a sleeve (14), which is guided through a hole in the component (11) and has a fastening screw (15) passing through it, and also comprising at least one decoupling element (19) disposed between the component (11) and the anchoring part (12), **characterized in that** a second sleeve (13) is mounted coaxially with the first sleeve (14), and an annular disc (17, 18) is disposed in each case at one end of the two sleeves (13, 14), so that one disc (18) is disposed between the anchoring part (12) and the component (11) and the other disc (17) is disposed between the component (11) and the screw head (15), the decoupling element (19), of which there is at least one, being mounted between the component (11) and the disc (18) which faces the anchoring part (12).

2. A device (10) according to Claim 1, **characterized in that** a second decoupling element (19) is mounted between the disc (17) facing the screw head (15) and the component (11).

3. A device (10) according to Claim 2, **characterized in that** the screw (15), the inner sleeve (14), the disc (17) facing the screw (15) and the second decoupling element (19) and/or the outer sleeve (13), the decoupling element (19), of which there is at least one, and the disc facing the anchoring part (12) are assembled to form one structural unit.

4. A device (10) according to one of Claims 1 to 3, **characterized in that** the two sleeves (13, 14) are fitted one inside the other with press fit.

5. A device (10) according to one of Claims 1 to 4, **characterized in that** the design of the fastening screw (15) is such that it cannot be lost.

6. A device (10) according to Claim 5, **characterized in that** the unlosable screw (15) is pressed with the inner sleeve (14).

7. A device (10) according to one of Claims 1 to 6, **characterized in that** the decoupling element (19), of which there is at least one, is made of an elastomer.

## Revendications

1. Dispositif (10) pour la fixation, notamment de découplage acoustique, de composants (11) pouvant facilement vibrer sur un élément d'ancrage (12), en particulier d'écrans thermiques dans des véhicules automobiles, comportant un manchon (14) guidé à travers un perçage du composant (11) à travers lequel est enfilée une vis de fixation (15), et comportant au moins un élément de découplage (19) disposé entre le composant (11) et l'élément d'ancrage (12), **caractérisé en ce qu'**un deuxième manchon (13) est monté coaxialement au premier manchon (14) et à chaque extrémité des deux manchons (13, 14) est disposée une rondelle circulaire (17, 18), de sorte que l'une des rondelles (18) est disposée entre l'élément d'ancrage (12) et le composant (11) et l'autre rondelle (17) entre le composant (11) et la tête de vis (15), ledit au moins un élément de découplage (19) étant placé entre le composant (11) et la rondelle (18) tournée vers l'élément d'ancrage (12).

2. Dispositif (10) selon la revendication 1, **caractérisé en ce qu'**un deuxième élément de découplage (19) est monté entre la rondelle (17) tournée vers la tête de vis (15) et le composant (11).

3. Dispositif (10) selon la revendication 2, **caractérisé en ce que** la vis (15), le manchon intérieur (14), la rondelle (17) tournée vers la vis (15) et le deuxième élément de découplage (19) et/ou le manchon extérieur (13), ledit au moins un élément de découplage (19) et la rondelle (18) tournée vers l'élément d'ancrage (12) sont montés en une unité de construction.

4. Dispositif (10) selon l'une des revendications 1 à 3, **caractérisé en ce que** les deux manchons (13, 14) sont emboîtés l'un dans l'autre avec ajustement pressé.

5. Dispositif (10) selon l'une des revendications 1 à 4, **caractérisé en ce que** la vis de fixation (15) est disposée imperdable.

6. Dispositif (10) selon la revendication 5, **caractérisé en ce que** la vis (15) imperdable est pressée avec le manchon intérieur (14).

7. Dispositif (10) selon l'une des revendications 1 à 6, **caractérisé en ce que** ledit au moins un élément de découplage (19) est fabriqué en un élastomère.
